Europäisches Patentamt

**European Patent Office**

**Office européen des brevets**

(11) Publication number: **0 174 674**
**A2**

# EUROPEAN PATENT APPLICATION

(21) Application number: **85201275.6**

(22) Date of filing: **06.08.85**

(51) Int. Cl.⁴: **B 65 D 33/02**
**B 65 D 75/28**

(30) Priority: **16.08.84 GB 8420864**

(43) Date of publication of application:
**19.03.86 Bulletin 86/12**

(84) Designated Contracting States:
**AT BE CH DE FR GB IT LI LU NL SE**

(71) Applicant: **THE PROCTER & GAMBLE COMPANY**
**One Procter & Gamble Plaza**
**Cincinnati Ohio 45202(US)**

(84) Designated Contracting States:
**CH GB LI SE AT**

(71) Applicant: **Procter & Gamble European Technical Center**
**Temselaan 100**
**B-1820 Strombeek-Bever(BE)**

(84) Designated Contracting States:
**BE DE FR IT LU NL**

(72) Inventor: **van den Broeck, Jan**
**Prieelstraat 102**
**B-1700 Asse(BE)**

(74) Representative: **Suslic, Lydia et al,**
**Procter & Gamble European Technical Center Temselaan**
**100**
**B-1820 Strombeek-Bever(BE)**

(54) **Flexible bag with inner stabilizing partition.**

(57) A flexible bag wherein two or more rows of compressed resilient articles are disposed and wherein an inner stabilizing partition is provided between the rows of resilient articles, in order to eliminate bulging of the filled and closed bag and prevent deformation of the resilient articles located in the corners of the bag.

Fig. 1

# FLEXIBLE BAG WITH INNER STABILIZING PARTITION

Jan Van den Broeck

This invention pertains to a flexible bag wherein two or more rows of compressed resilient articles are disposed and wherein an inner stabilizing partition is provided between the rows of resilient articles, in order to eliminate bulging of the filled and closed bag and prevent deformation of the resilient articles located in the corners of the bag.

Present shipping, storing and displaying techniques have made it desirable to stack consumer goods on pallets, or otherwise, to a considerable height, thus making stability/stackability of the individual consumer goods highly desirable. On the other hand, cost of packing material has led manufacturers to replace easily stackable cardboard containers by cheaper flexible plastic containers. This is especially true for disposable articles like diapers etc. Furthermore, as in the case of disposable articles, consumers have been attracted by the so-called convenience packs, which group a larger quantity of individual items in a less expensive container, leading to a lower unitary cost. It has, however, been found that, when such resilient articles are packed in rows in a flexible bag, and are compressed in this bag upon sealing, the total package tends to bulge, which makes stable stacking almost impossible. Furthermore, some of the individual items packed in the sealed bag and located at the end of the row, i.e. in the corners of the sealed bag, tend to deform due to the stress exerted at these points. The present invention discloses a way to solve these problems.

Flexible bags containing rows of compressed resilient articles are well-known and readily available on the market. See for example the polybags containing disposable diapers sold under a variety of brand names. German patent application DOS 2 922 514 (to Norsk Hydro AS, Oslo), discloses a reinforced flexible bag for flowing material. The reinforcement is achieved by providing one or more strips of reinforcing material of varying width around the bag. European patent application O 106 256 (to Unilever PLC, London) discloses a carrying means for plastic bags provided for containing a large quantity of products but does not disclose a means for reinforcing or stabilizing.

In the present invention, a flexible bag with an inner stabilizing partition is provided whereby the partition is sealed in the two side-seams of the bag and is disposed in such a way as to divide the inside of the bag into individual tunnels, dimensioned in order to exactly enclose a row of compressible resilient articles to be packed in said bag. The partition is made of the same material as the flexible bag or of any other compatible material. The bag can be made before filling with the compressible resilient articles or can be shaped and formed around the articles to be packed at the time of the packing operation. A carrying handle can also be provided by a cut-out in an extension of the bag material.

While the specification concludes with claims which particularly point out and distinctly claim the subject matter forming the present invention, it is believed the invention will be better understood from the following description taken in conjunction with the accompanying drawings in which identical features in the several views are identically designated and in which :

Fig 1 is a perspective view of an unfilled bag according to the present invention.

Fig. 2 is a perspective view of a filled and sealed bag according to the present invention.

Fig. 3a, 3b, 3c give a persective view of one method of making the bag according to the present invention.

Fig. 4a, 4b, 4c give a perspective view of another method for making a bag according to the present invention.

Fig. 5a, 5b, 5c give a perspective view of a method for shaping the bag according to the present invention around the compressible resilient articles during the packing operation.

0174674

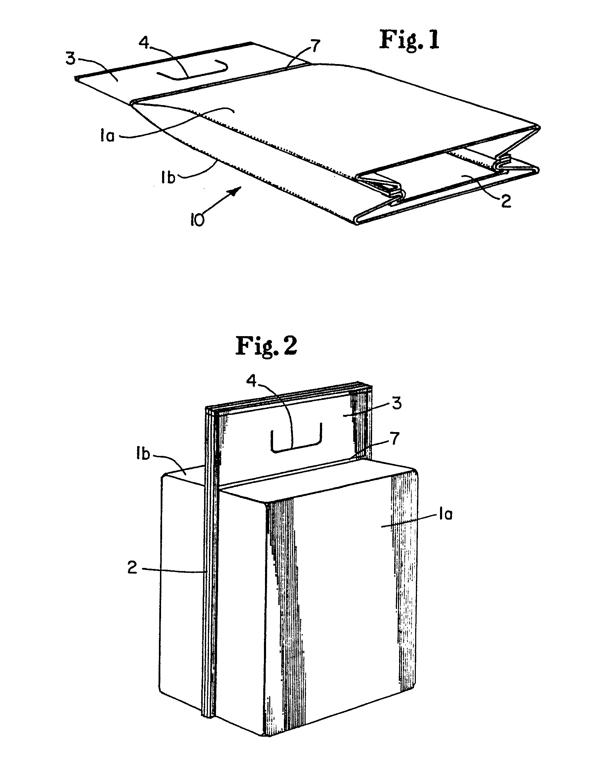

The flexible bag 10 according to the present invention as shown in Fig. 1 consists of exterior sheets 1a and 1b, stabilizing partition 2, seal line 7 and an optional extension 3 in which a carrying hole 4 is optionally cut out.

Fig. 2 shows the same bag after the resilient articles have been compressed and inserted into it and after the complete package has been sealed.

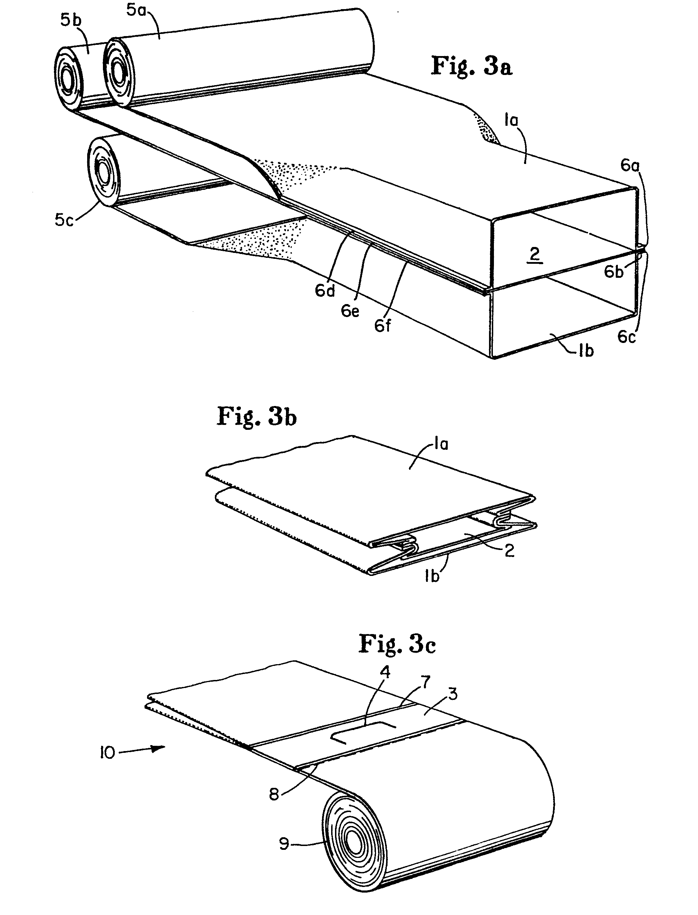

Fig. 3a, 3b, 3c show a method for making the bag represented in Fig. 1. Three layers of polyethylene film are taken from rolls 5a, 5b and 5c and are sealed together along their outer edges 6a, 6b, 6c, 6d, 6e, 6f. The layer coming from roll 5b and forming the inner partition 2 is narrower than the layers coming from rolls 5a and 5c forming the outside 1a and 1b of the bag. After the three layers of film are sealed together, a type of tube is formed, which is folded flat as shown in Fig. 3b. Fig. 3c shows how a seal-line 7 has been applied in cross-direction and how a cut-out 4 in extension 3 is provided. A seal-line with perforations 8 defines the edge of extension 3 and allows easy separation of the bag from roll of bags 9 at the time of the packing operation.

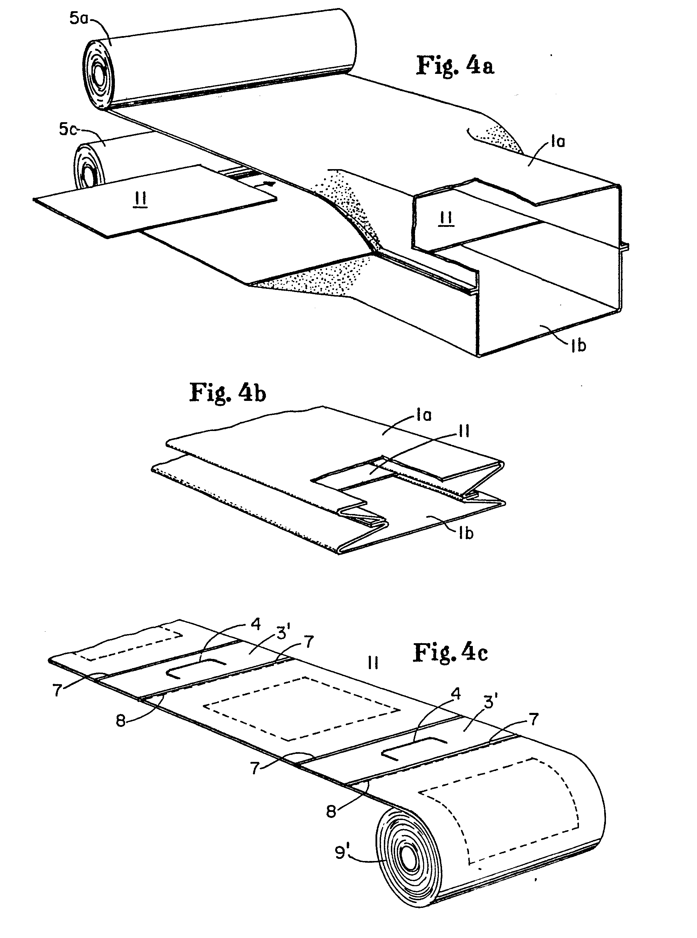

Fig. 4a, 4b and 4c show another way of making the bag according to the present invention, using less material for the stabilizing partition. Instead of using for the stabilizing partition film 5b, coming from a roll which means that part of the film goes into the handle extension or into the bottom seal, where it does not act as stabilizer, individual sheets of film 11, dimensioned to the exact size needed for stabilization, are inserted between the two outer films and sealed in the same way as explained for Fig. 3. After the two layers of film forming the outside of the bag 1a and 1b and surrounding

the individual sheet 11 are sealed together, a type of
tube is formed, which is folded flat (4b). Fig. 4c shows
how a seal-line 7 has been applied in cross-direction and
how a cut-out 4 in extension 3' is provided. A seal-line
with perforations 8 defines the edge of extension 3' and
allows easy separation of the bag from the roll of bags
9' at the time of the packing operation.

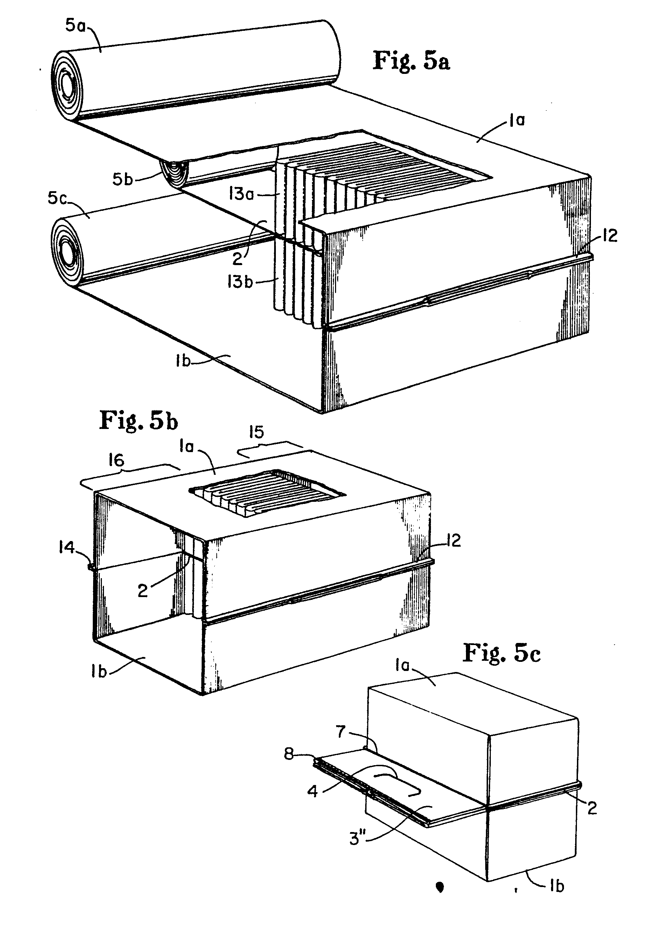

Fig. 5a, 5b and 5c show another way of making the bag
according to the present invention, by shaping it around
the compressible resilient articles during the packing
operation. Fig. 5a shows how three layers of
polyethylene film taken from rolls 5a, 5b and 5c, are
sealed together at their starting point along line 12,
and how two rows of resilient articles 13a and 13b are
inserted respectively between layers 1a and 2' and layers
2' and 1b. The layer coming from roll 5b and forming the
inner stabilizing partition 2' is narrower than the
layers coming from rolls 5a and 5c forming the outside 1a
and 1b of the bag. Fig. 5b shows how layers 1a, 1b and
2' are sealed together along line 14 in such a way as to
tightly enclose the two rows 13a and 13b of resilient
articles. Fig. 5c shows the unfinished pack of Fig. 5b
in finished form in that the part 15 of film material 1a
and 1b extending beyond the rows of resilient articles
13a and 13b is folded over and sealed together in a
conventional way, and in that the part 16 of the same
film layers 1a and 1b, extending beyond the opposite side
of rows 13a and 13b of resilient articles is sealed
together at line 7, at line 8, and a cut-out 4 is
provided in extension 3".

The above three methods for making a bag with inner
stabilizing partition according to the invention are not
exhaustive, as will be evident to the person of the art.

The stabilizing and non deforming performance of the bag according to the present invention has been tested for packing disposable diapers. A sheet of polyethylene of 22 cm x 56 cm and of 50-100 microns of thickness, was heat sealed on two opposite sides between two sheets of polyethylene of 49 cm x 76 cm. The so-formed tube was sealed at one end. Two rows of folded disposable diapers (22 cm x 12 cm x 2 cm when folded), 30 in a row, were compressed to 80% of their original thickness and inserted into the bag, one row on each side of the inner partition, and the bag was heat sealed. The finished pack did not show any bulging, even after three months, and, after opening it, the individual items located at the end of each row did not show any deformation caused by stress. A display of these finished packs, two meters high, was built and remained stable for the two months it was left to stand.

While the above example uses polyethylene sheets for the outer layers of the bag as well as for the partition, any flexible material including composites, laminates and paper can be used. The stabilizing principle also works if several partitions are foreseen, the number of partitions being equal to the number of rows of product minus one. The degree of compression of the resilient articles can be as high as 65% of the original thickness. The several layers of flexible material constituting the bag with stabilizing partition can be kept together to form the finished bag in any convenient way adapted to the material used, like heat sealing, glueing, bonding, etc.

The bags herein may also be used to package, for example, catamenials, disposable adult incontinence devices, and similar compressible items, as well as baby diapers.

- 1 -                                    0174674

CLAIMS

1. Flexible bag consisting of exterior sheets (1a and 1b), sealed together longitudinally on both opposite sides (6a,b,c,d,e,f or 12 and 14) as well as cross-directionally (7), characterized in that a stabilizing partition (2,2', 11) is inserted and sealed between said exterior sheets (1a and 1b).

2. Flexible bag according to Claim 1, characterized in that the material constituting said stabilizing partition (2) is almost of the same length as the material constituting said exterior sheets (1a and 1b).

3. Flexible bag according to Claim 1, characterized in that the material constituting said stabilizing partition (2',11) is so dimensioned as to match the size of the row of items (13a and 13b) to be packed, at the surface where said rows of items are separated from each other by said stabilizing partition.

4. Flexible bag according to Claim 1, characterized in that a row of disposable diapers is inserted on each side of the stabilizing partition (2,2',11).

5. Flexible bag according to Claim 1, characterized in that a row of disposable adult incontinence devices is inserted on each side of the stabilizing partition (2,2',11).

6. Flexible bag according to Claim 1, characterized in that a row of catamenial devices is inserted on each side of the stabilizing partition (2,2',11).

1/4

Fig. 1

3 4 7

1a

1b

10

2

Fig. 2

4

1b

3

7

1a

2

0174674

2/4

Fig. 3a

Fig. 3b

Fig. 3c

5a

**Fig. 4a**

Ia

5c

II

II

Ib

**Fig. 4b**

Ia

II

Ib

4 3' 7

**Fig. 4c**

II

7

7

8

4 3'

7

7

8

9'

Fig. 5a

Fig. 5b

Fig. 5c